(19) Europäisches Patentamt
European Patent Office
Office européen des brevets

(11) **EP 3 625 044 B1**

(12) **EUROPÄISCHE PATENTSCHRIFT**

(45) Veröffentlichungstag und Bekanntmachung des Hinweises auf die Patenterteilung:
**13.01.2021 Patentblatt 2021/02**

(21) Anmeldenummer: **17726226.8**

(22) Anmeldetag: **16.05.2017**

(51) Int Cl.:
*B32B 15/01* (2006.01)     *C22C 38/02* (2006.01)
*C22C 38/04* (2006.01)     *C22C 38/06* (2006.01)
*C22C 38/22* (2006.01)     *C22C 38/26* (2006.01)
*C22C 38/28* (2006.01)     *C22C 38/32* (2006.01)
*C22C 38/38* (2006.01)

(86) Internationale Anmeldenummer:
**PCT/EP2017/061773**

(87) Internationale Veröffentlichungsnummer:
**WO 2018/210415 (22.11.2018 Gazette 2018/47)**

(54) **WARMUMFORMMATERIAL, BAUTEIL UND VERWENDUNG**

HOT-WORKING MATERIAL, COMPONENT AND USE

MATÉRIAU DE FORMAGE À CHAUD, PIÈCE ET UTILISATION CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.03.2020 Patentblatt 2020/13**

(73) Patentinhaber:
• **ThyssenKrupp Steel Europe AG**
  **47166 Duisburg (DE)**
• **thyssenkrupp AG**
  **45143 Essen (DE)**

(72) Erfinder:
• **BECKER, Jens-Ulrik**
  **47058 Duisburg (DE)**
• **MYSLOWICKI, Stefan**
  **41238 Mönchengladbach (DE)**

(74) Vertreter: **ThyssenKrupp Steel Europe AG**
**Patente/Patent Department**
**Kaiser-Wilhelm-Straße 100**
**47166 Duisburg (DE)**

(56) Entgegenhaltungen:
EP-A1- 2 886 332          DE-A1-102014 114 365
DE-A1-102015 116 619     DE-B3-102015 114 989

## Beschreibung

### Technisches Gebiet

Die Erfindung betrifft ein Warmumformmaterial aus einem dreilagigen Werkstoffverbund.

### Technischer Hintergrund

In der Automobilindustrie wird nach neuen Lösungen zur Reduzierung des Fahrzeuggewichts und damit einhergehend zur Reduzierung des Kraftstoffverbrauchs gesucht. Leichtbau ist dabei ein wesentlicher Baustein, um das Fahrzeuggewicht senken zu können. Dies kann unter anderem durch den Einsatz von Werkstoffen mit gesteigerter Festigkeit erzielt werden. Mit dem Anstieg der Festigkeit nimmt in der Regel dessen Biegevermögen ab. Um trotz gesteigerter Festigkeit zur Realisierung von Leichtbau auch den bei crashrelevanten Bauteilen erforderlichen Insassenschutz sicherzustellen, ist zu gewährleisten, dass die eingesetzten Werkstoffe die durch einen Crash eingeleitete Energie durch Deformation umwandeln können. Dies bedingt ein hohes Maß an Umformvermögen insbesondere in den crashrelevanten Bauteilen einer Fahrzeugstruktur. Eine Möglichkeit, Gewicht einzusparen, ist beispielsweise die Karosserie und/oder das Fahrwerk eines landgebundenen Fahrzeugs noch leichter, durch innovative Werkstoffe im Vergleich zu den konventionell eingesetzten Werkstoffen zu gestalten bzw. zu bauen. So können beispielsweise bauteilspezifisch konventionelle Werkstoffe durch Werkstoffe mit dünneren Wandstärken mit vergleichbaren Eigenschaften ersetzt werden. Beispielsweise finden immer mehr Hybridwerkstoffe oder Werkstoffverbunde Einzug in der Automobilindustrie, die aus zwei oder mehreren unterschiedlichen Materialien zusammengesetzt sind, wobei jedes einzelne Material bestimmte, teils gegensätzliche Eigenschaften aufweist, die im Werkstoffverbund vereint werden, um im Werkstoffverbund im Vergleich zu den einzelnen, monolithischen Materialien verbesserte Eigenschaften zu erzielen. Werkstoffverbunde, insbesondere aus unterschiedlichen Stählen zusammengesetzt sind im Stand der Technik bekannt, beispielsweise aus der deutschen Offenlegungsschrift DE 10 2008 022 709 A1 oder aus der europäischen Offenlegungsschrift EP 2 886 332 A1.

Ein für die Warmumformung konzipierter Stahl-Werkstoffverbund wird seitens der Anmelderin unter dem Handelsnamen "Tribond®" 1200 und 1400 vertrieben. Es wird ein höchstfester, härtbarer Stahl als Kernlage und ein duktiler Stahl als Decklagen in unterschiedlichen Materialdicken eingesetzt, um das Ziel aus hoher Festigkeit und Duktilität zu erreichen. Um bei solchen Werkstoffpaarungen ein akzeptables Restumformvermögen im pressgehärteten Zustand zu erreichen, ist ein hohe Materialdicke des duktilen Verbundpartners vorgesehen. Dies reduziert die Festigkeit des Werkstoffverbundes auf zwei Arten: erstens ist es der duktile Anteil selbst, der hierzu führt, zweitens wird die Festigkeit des Kerns gesenkt, da im Verlauf der Fertigung (Warmwalzplattieren) und der Verarbeitung (Warmumformung) Diffusionsströme der Legierungselemente zwischen den Verbundpartnern auftreten. Beispielsweise diffundiert Kohlenstoff von der Kernlage in die Decklage, härtet diese auf und senkt dabei gleichzeitig die Festigkeit im Kernbereich. Bei Verwendung von dünnen Decklagen wird zwar eine hohe Gesamtfestigkeit erreicht, durch die Diffusionsprozesse tritt aber eine vergleichsweise starkes Aufhärten des duktilen Verbundpartners auf, so dass die Duktilitätsziele am Ende nicht erreicht werden können.

Bei der Warmumformung werden die eingangs erwähnten Stahlwerkstoffverbunde zu Platinen zugeschnitten und auf Austenitisierungstemperatur erwärmt, um sie anschließend in einem gekühlten Werkzeug gleichzeitig warm umzuformen und abzukühlen. Durch eine intensive Abkühlung, wobei Abkühlraten von mindestens 27 K/s beim Einsatz eines 22MnB5 als Kernlage erforderlich sind, wandelt das Gefüge von Austenit vollständig in Martensit um und der zum Bauteil verarbeitete Werkstoff erhält im pressgehärteten Zustand seine angestrebte hohe Festigkeit in der Kernlage. Dieses Verfahren ist in den Fachkreisen auch unter dem Begriff Presshärten bekannt. Die hierzu eingesetzten Stahlwerkstoffverbunde sind mit einem aluminiumbasierten Überzug, beispielsweise einem AlSi-Überzug versehen, um beim Erwärmen der Stahlplatine auf Austenitisierungstemperatur eine unerwünschte Zunderbildung zu vermeiden.

Die Auslegung des Stahlwerkstoffverbundes für die Warmumformung erfolgte bisher auf Grundlage der mechanischen Eigenschaften. Nachteilig wirkt sich aufgrund der chemischen Zusammensetzung der Verbundpartner die Interaktion der lokalen Legierungselemente insbesondere während der Fertigung zum Werkstoffverbund und während der Warmumformung aus, die zu einer nicht zufriedenstellenden Festigkeit respektive Duktilität des Werkstoffverbundes führt.

### Zusammenfassung der Erfindung

Aufgabe der vorliegenden Erfindung ist es, ein Warmumformmaterial bereitzustellen, welches bei dem trotz in der Fertigung und Verarbeitung ablaufenden Diffusionsprozesse geringere Veränderungen in den Eigenschaften der einzelnen Lagen (Verbundpartner) als im Vergleich zu den aus dem Stand der Technik bekannten Werkstoffverbunden bei gleichzeitig hoher Festigkeit und Duktilität im oberflächennahen Bereich aufweist.

Gelöst wird diese Aufgabe durch ein Warmumformmaterial mit den Merkmalen des Patentanspruchs 1.

Um das beschriebene Problem bezüglich der Diffusion zu umgehen und die erreichbare Gesamtfestigkeit eines Werkstoffverbundes bei gleichzeitig hoher Restduktilität zu erhöhen, ist es notwendig, die Diffusionsströme zwischen den Verbundpartnern in geeigneter Form zu drosseln. Dies kann dadurch erreicht werden, wenn das im Wesentlichen zur Festigkeit und/oder Härte beitragende Legierungselement Kohlenstoff in den Decklagen im Vergleich zum Stand der Technik mit einem höheren C-Gehalt vorgesehen ist, so dass dadurch die Diffusionsgeschwindigkeit dieses Legierungselementes infolge eines geringeren Konzentrationsunterschiedes zwischen Decklagen und Kernlage gesenkt werden kann. Das erfindungsgemäße Warmumformmaterial aus einem dreilagigen Werkstoffverbund umfasst eine Kernlage aus einem härtbaren Stahl, welcher im pressgehärteten Zustand des Warmumformmaterials eine Zugfestigkeit > 1900 MPa und/oder eine Härte > 575 HV10, insbesondere eine Zugfestigkeit > 2000 MPa und/oder eine Härte > 600 HV10, vorzugsweise eine Zugfestigkeit > 2100 MPa und/oder eine Härte > 630 HV10, bevorzugt eine Zugfestigkeit > 2200 MPa und/oder eine Härte > 660 HV10, weiter bevorzugt eine Zugfestigkeit > 2300 MPa und/oder eine Härte > 685 HV10 aufweist, und zwei stoffschlüssig mit der Kernlage verbundene Decklagen aus einem im Vergleich zur Kernlage weicheren Stahl, welcher im pressgehärteten Zustand des Warmumformmaterials eine Zugfestigkeit > 750 MPa und/oder eine Härte > 235 HV10, insbesondere eine Zugfestigkeit > 900 MPa und/oder eine Härte > 280 HV10, vorzugsweise eine Zugfestigkeit > 1000 MPa und/oder eine Härte > 310 HV10, bevorzugt eine Zugfestigkeit > 1100 MPa und/oder eine Härte > 340 HV10, weiter bevorzugt eine Zugfestigkeit > 1200 MPa und/oder eine Härte > 370 HV10, besonders bevorzugt eine Zugfestigkeit > 1300 MPa und/oder eine Härte > 400 HV10 aufweist und auf eine Zugfestigkeit von maximal 1800 MPa und/oder eine Härte von maximal 550 HV10, insbesondere auf eine Zugfestigkeit von maximal 1700 MPa und/oder eine Härte von maximal 520 HV10, vorzugsweise auf eine Zugfestigkeit von maximal 1600 MPa und/oder eine Härte von maximal 500 HV10 beschränkt ist, um die Vorteile des Stahlwerkstoffverbundes im Vergleich zu einem monolithischen höchstfesten Stahlwerkstoff hinsichtlich der mechanischen Eigenschaften mit vergleichbaren Festigkeiten ausspielen zu können.

HV entspricht der Vickershärte und wird nach DIN EN ISO 6507-1:2005 bis -4: 2005 ermittelt.

Das Warmumformmaterial kann band-, platten- oder blechförmig ausgeführt sein bzw. den weiteren Prozessschritten bereitgestellt werden. Das Warmumformmaterial kann somit in bestehende Standard-Prozesse der Warmumformung integriert werden, ohne Änderungen in der Prozesskette vornehmen zu müssen.

Erfindungsgemäß besteht die Kernlage neben Fe und herstellungsbedingt unvermeidbaren Verunreinigungen in Gew.-% aus

C: 0,31 - 0,6 %,

Si: bis 0,5 %,

Mn: 0,5 - 2,0 %,

P: bis 0,06 %,

S: bis 0,03 %,

Al: bis 0,2 %,

Cr+Mo: bis 1,2 %,

Cu: bis 0,2%,

N: bis 0,01 %,

Nb+Ti: bis 0,2 %,

Ni: bis 0,4 %,

V: bis 0,2 %,

B: bis 0,01 %,

As: bis 0,02 %,

Ca: bis 0,01 %,

Co: bis 0,02 %,

Sn: bis 0,05 %.

C ist ein festigkeitssteigerndes Legierungselement und trägt mit zunehmendem Gehalt zur Festigkeitssteigerung bei, so dass ein Gehalt von mindestens 0,31 Gew.-%, insbesondere von mindestens 0,33 Gew.-%, vorzugsweise von mindestens 0,37 Gew.-%, weiter bevorzugt von mindestens 0,42 Gew.-%, besonders bevorzugt von mindestens 0,45 Gew.-% vorhanden ist, um die gewünschte Festigkeit zu erreichen bzw. einzustellen. Mit höherer Festigkeit nimmt auch die Sprödigkeit zu, so dass der Gehalt auf maximal 0,6 Gew.-%, insbesondere maximal 0,55 Gew.-%, vorzugsweise maximal 0,53 Gew.-% beschränkt ist, um die Werkstoffeigenschaften nicht negativ zu beeinflussen und eine ausreichende Schweißbarkeit sicherzustellen.

Si ist ein Legierungselement, das zur Mischkristallhärtung beitragen kann und kann sich je nach Gehalt positiv in einer Festigkeitssteigerung auswirken, so dass ein Gehalt von mindestens 0,05 Gew.-% vorhanden sein kann. Das Legierungselement ist auf maximal 0,5 Gew.-%, insbesondere maximal 0,45 Gew.-%, vorzugsweise maximal 0,4 Gew.-% beschränkt, um eine ausreichende Walzbarkeit sicherzustellen.

Mn ist ein Legierungselement, das zur Härtbarkeit beiträgt und sich positiv auf die Zugfestigkeit auswirkt, insbesondere zum Abbinden von S zu MnS, so dass ein Gehalt von mindestens 0,5 Gew.-% vorhanden ist. Das Legierungselement ist auf maximal 2,0 Gew.-%, insbesondere maximal 1,7 Gew.-%, vorzugsweise maximal 1,5 Gew.-% beschränkt, um eine ausreichende Schweißbarkeit sicherzustellen.

Al kann als Legierungselement zur Desoxidation beitragen, wobei ein Gehalt mit mindestens 0,01 Gew.-%, insbesondere mit 0,015 Gew.-% vorhanden sein kann. Das Legierungselement ist auf maximal 0,2 Gew.-%, insbesondere maximal 0,15 Gew.-%, vorzugsweise maximal 0,1 Gew.-% beschränkt, um Ausscheidungen im Werkstoff insbesondere in Form von nichtmetallischen oxidischen Einschlüssen im Wesentlichen zu reduzieren und/oder zu vermeiden, welche negativ die Werkstoffeigenschaften beeinflussen können. Beispielsweise kann der Gehalt zwischen 0,02 und 0,06 Gew.-% eingestellt sein.

Cr kann als Legierungselement je nach Gehalt auch zur Einstellung der Festigkeit, insbesondere positiv zur Härtbarkeit beitragen, insbesondere mit einem Gehalt von mindestens 0,05 Gew.-%. Das Legierungselement ist auf maximal 1,0 Gew.-%, insbesondere maximal 0,8 Gew.-%, vorzugsweise maximal 0,7 Gew.-% beschränkt, um eine ausreichende Schweißbarkeit sicherzustellen.

B kann als Legierungselement zur Härtbarkeit und Festigkeitssteigerung beitragen, insbesondere wenn N abgebunden werden soll und kann mit einem Gehalt von mindestens 0,0008 Gew.-%, insbesondere von mindestens 0,001 Gew.-% vorhanden sein. Das Legierungselement ist auf maximal 0,01 Gew.-%, insbesondere auf maximal 0,008 Gew.-% beschränkt, da höhere Gehalte sich nachteilig auf die Werkstoffeigenschaften auswirken können und eine Reduzierung der Härte und/oder Festigkeit im Werkstoff zur Folge hätte.

Ti und Nb können als Legierungselemente einzeln oder in Kombination zur Kornfeinung und/oder N-Abbindung zulegiert werden, insbesondere wenn Ti mit einem Gehalt von mindestens 0,005 Gew.-% vorhanden ist. Zur vollständigen Abbindung von N wäre der Gehalt an Ti mit mindestens 3,42*N vorzusehen. Die Legierungselemente sind in Kombination auf maximal 0,2 Gew.-%, insbesondere maximal 0,15 Gew.-%, vorzugsweise maximal 0,1 Gew.-% beschränkt, da höhere Gehalte sich nachteilig auf die Werkstoffeigenschaften, insbesondere sich negativ auf die Zähigkeit des Werkstoffs auswirken können.

Mo, V, Cu, Ni, Sn, Ca, Co, As, N, P oder S sind Legierungselemente, die einzeln oder in Kombination, wenn sie nicht gezielt zur Einstellung spezieller Eigenschaften zulegiert werden, zu den Verunreinigungen gezählt werden können. Die Gehalte sind beschränkt auf maximal 0,2 Gew.-% Mo, auf maximal 0,2 Gew.-% V, auf maximal 0,2 Gew.-% Cu, auf maximal 0,4 Gew.-% Ni, auf maximal 0,05 Gew.-% Sn, auf maximal 0,01 Gew.-% Ca, auf maximal 0,02 Gew.-% Co, auf maximal 0,02 Gew.-% As, auf maximal 0,01 Gew.-% N, auf maximal 0,06 Gew.-% P, auf maximal 0,03 Gew.-% S.

Erfindungsgemäß bestehen die Decklagen des Warmumformmaterials neben Fe und herstellungsbedingt unvermeidbaren Verunreinigungen in Gew.-% aus

C: 0,13 - 0,3 %,
Si: bis 1,0 %,
Mn: 0,3 - 3,0 %,
P: bis 0,1 %,
S: bis 0,06 %,
Al: bis 1,0 %,
Cr+Mo: bis 1,5 %,
Cu: bis 0,3%,
N: bis 0,01 %,
Ni: bis 0,3 %,
Nb+Ti: bis 0,25 %,
V: bis 0,05 %,
B: bis 0,01 %,
Sn: bis 0,05 %,
Ca: bis 0,01 %,
Co: bis 0,02 %.

Zur Erhöhung der Festigkeit im oberflächennahen Bereich des Warmumformmaterials liegt C als Legierungselement mit mindestens 0,13 Gew.-% vor und ist aufgrund der Verform- als auch der Beschichtbarkeit auf maximal 0,3 Gew.-% beschränkt. Der C-Gehalt liegt beispielsweise im Bereich zwischen 0,13 - 0,28 Gew.-%, insbesondere zwischen 0,17 - 0,25 Gew.-% vor.

Si ist ein Legierungselement, das zur Mischkristallhärtung beitragen kann und kann sich positiv in einer Festigkeitssteigerung auswirken, so dass ein Gehalt von mindestens 0,01 Gew.-% vorhanden sein kann. Das Legierungselement ist auf maximal 1,0 Gew.-%, insbesondere maximal 0,9 Gew.-%, vorzugsweise maximal 0,8 Gew.-% beschränkt, um eine ausreichende Walzbarkeit und/oder Oberflächenqualität sicherzustellen.

Mn ist ein Legierungselement, das zur Härtbarkeit beiträgt und sich positiv auf die Zugfestigkeit auswirkt, insbesondere zum Abbinden von S zu MnS, so dass ein Gehalt von mindestens 0,3 Gew.-% vorhanden ist. Das Legierungselement ist auf maximal 3,0 Gew.-%, insbesondere maximal 2,8 Gew.-%, vorzugsweise maximal 2,6 Gew.-%

beschränkt, um eine ausreichende Schweißbarkeit sicherzustellen.

Al kann als Legierungselement zur Desoxidation beitragen, wobei ein Gehalt mit mindestens 0,005 Gew.-%, insbesondere mit mindestens 0,01 Gew.-% vorhanden sein kann. Al ist auf maximal 1,0 Gew.-%, insbesondere maximal 0,9 Gew.-%, vorzugsweise maximal 0,8 Gew.-%, beschränkt ist, um Ausscheidungen im Werkstoff insbesondere in Form von nichtmetallischen oxidischen Einschlüssen im Wesentlichen zu reduzieren und/oder zu vermeiden, welche negativ die Werkstoffeigenschaften beeinflussen können.

Cr kann als Legierungselement je nach Gehalt auch zur Einstellung der Festigkeit beitragen, insbesondere mit einem Gehalt von mindestens 0,05 Gew.-% und auf maximal 1,3 Gew.-%, insbesondere maximal 1,1 Gew.-%, vorzugsweise maximal 0,9 Gew.-% beschränkt, um eine im Wesentlichen vollständige Beschichtbarkeit der Oberfläche gewährleisten zu können.

B kann als Legierungselement zur Härtbarkeit und Festigkeitssteigerung beitragen, insbesondere wenn N abgebunden werden soll und kann mit einem Gehalt von mindestens 0,0008 Gew.-% vorhanden sein. Das Legierungselement ist auf maximal 0,01 Gew.-%, insbesondere auf maximal 0,005 Gew.-% beschränkt, da höhere Gehalte sich nachteilig auf die Werkstoffeigenschaften auswirken können und eine Reduzierung der Härte und/oder Festigkeit im Werkstoff zur Folge hätte.

Ti und Nb können als Legierungselemente einzeln oder in Kombination zur Kornfeinung und/oder N-Abbindung zulegiert werden, insbesondere mit Gehalten von mindestens 0,001 Gew.-% Ti und/oder von mindestens 0,001 Gew.-% Nb. Zur vollständigen Abbindung von N wäre der Gehalt an Ti mit mindestens 3,42*N vorzusehen. Die Legierungselemente sind in Kombination auf maximal 0,25 Gew.-%, insbesondere maximal 0,2 Gew.-%, vorzugsweise maximal 0,15 Gew.-% beschränkt, da höhere Gehalte sich nachteilig auf die Werkstoffeigenschaften, insbesondere sich negativ auf die Zähigkeit des Werkstoffs auswirken können.

Mo, V, Cu, Ni, Sn, Ca, Co, N, P oder S sind Legierungselemente, die einzeln oder in Kombination, wenn sie nicht gezielt zur Einstellung spezieller Eigenschaften zulegiert werden, zu den Verunreinigungen gezählt werden können. Die Gehalte sind beschränkt auf maximal 0,2 Gew.-% Mo, auf maximal 0,05 Gew.-% V, auf maximal 0,3 Gew.-% Cu, auf maximal 0,3 Gew.-% Ni, auf maximal 0,05 Gew.-% Sn, auf maximal 0,01 Gew.-% Ca, auf maximal 0,02 Gew.-% Co, auf maximal 0,01 Gew.-% N, auf maximal 0,1 Gew.-% P, auf maximal 0,06 Gew.-% S.

Vorzugsweise bestehen die Decklagen ebenfalls aus einem härtbaren Stahl.

Gemäß einer weiteren Ausgestaltung des Warmumformmaterials weisen die Decklagen jeweils eine Materialdicke zwischen 5 % und 30 %, insbesondere zwischen 10 % und 20 % bezogen auf die Gesamtmaterialdicke des Warmumformmaterials auf. Die Decklagen sollten in ihrer Materialdicke derart bemessen sein, so dass sie die positiven Eigenschaften der Kernlage nicht wesentlich negativ beeinflussen, wobei die Materialdicken der Decklagen (pro Seite) auf maximal 15 %, insbesondere auf maximal 10 %, vorzugsweise auf maximal 5% bezogen auf die Gesamtmaterialdicke des Warmumformmaterials beschränkt sind, um so das aus dem Festigkeitsniveau abzuleitende Leichtbaupotenzial sicher zu stellen, wobei versucht wird die (Gesamt-) Festigkeit des Werkstoffverbundes möglichst nah an dem Niveau des höchstfesten Kernwerkstoffes als monolithisches Material zu halten. Das Warmumformmaterial respektive der dreilagige Werkstoffverbund weist eine Gesamtmaterialdicke zwischen 0,6 und 8,0 mm, insbesondere zwischen 1,2 und 5,0 mm und vorzugsweise zwischen 1,5 und 4,0 mm auf.

Gemäß einer weiteren Ausgestaltung des Warmumformmaterials ist der Werkstoffverbund mittels Plattieren, insbesondere Walzplattieren, vorzugsweise Warmwalzplattieren oder mittels Gießen hergestellt. Bevorzugt ist das erfindungsgemäße Warmumformmaterial mittels Warmwalzplattieren, wie es beispielsweise in der deutschen Patentschrift DE 10 2005 006 606 B3 offenbart ist, hergestellt. Es wird Bezug auf diese Patentschrift genommen, deren Inhalt hiermit in diese Anmeldung aufgenommen wird. Alternativ kann das erfindungsgemäße Warmumformmaterial mittels Gießen hergestellt werden, wobei eine Möglichkeit zu seiner Herstellung in der japanischen Offenlegungsschrift JP-A 03 133 630 offenbart ist. Die metallische Werkstoffverbundherstellung ist allgemein aus dem Stand der Technik bekannt.

Um den Konzentrationsunterschied von Kohlenstoff zwischen den einzelnen Lagen (Verbundpartner) möglichst gering zu halten, ist gemäß einer weiteren Ausgestaltung des Warmumformmaterials das Verhältnis vom C-Gehalt der Kernlage zum C-Gehalt der Decklage < 6, insbesondere < 5, vorzugsweise < 4, besonders bevorzugt < 3. Dadurch kann auch das Ziel mit einem geringeren Abfall der (Gesamt-) Festigkeit des Warmumformmaterials erreicht werden. Ein weiterer Vorteil, der sich hieraus ergibt, ist ein vermindertes Vermischen der lokal vorliegenden chemischen Zusammensetzung. Dies bewirkt ein geringeres Ausbilden von Mischbereichen. Die Eigenschaften der Verbundpartner entsprechen in ihren Bereichen daher eher denen, die von dem jeweiligen Material als monolithischem Werkstoff bekannt sind.

Um bei einer ausreichenden Materialdicke der duktilen Decklagen eine hohe Gesamtfestigkeit und auch Biegefestigkeit aufweisen zu können, sollte der Werkstoffverbund eine möglichst hohe Festigkeit im oberflächennahen Bereich aufweisen. Gemäß einer bevorzugten Ausgestaltung besitzt das Warmumformmaterial im pressgehärteten Zustand einen Faktor $S > 1.000.000$ [MPa$^2$], insbesondere einen Faktor $S > 1.500.000$ [MPa$^2$], vorzugsweise einen Faktor $S > 2.000.000$ [MPa$^2$], besonders bevorzugt einen Faktor $S > 2.005.000$ [MPa$^2$]. Der Faktor S wird durch das Produkt aus der Summe der Zugfestigkeiten der jeweiligen Lagen in Abhängigkeit von der jeweiligen Materialdicke und der Zugfestigkeit der Decklage im pressgehärteten Zustand bestimmt. S wird wie folgt ermittelt:

$$S = (\% \ R_m \ (\text{Kernlage}) + \% \ R_m \ (\text{Decklagen})) * R_m \ (\text{Decklage}),$$

wobei $R_m$ den Zugfestigkeiten und % den prozentualen Materialdicken der jeweiligen Lagen entsprechen.

Um den Verlust an Festigkeit durch das Vorsehen eines im Vergleich zur Kernlage duktileren Decklage möglichst gering zu halten, sind Decklagen zu verwenden, die selbst eine möglichst große Festigkeit mitbringen und dennoch in der Lage sind, die geringe Restduktilität der höchstfesten Kernlage zu kompensieren. So besitzt das Warmumformmaterial gemäß einer weiteren bevorzugten Ausgestaltung im pressgehärteten Zustand einen Faktor M > 110.000 [°MPa]. Der Faktor M wird durch das Produkt aus Biegewinkel und Zugfestigkeit des Warmumformmaterials im pressgehärteten Zustand bestimmt. M wird wie folgt ermittelt:

$$M = R_m \ (\text{Verbund}) * \alpha \ (\text{Verbund}),$$

wobei $R_m$ der Zugfestigkeit und $\alpha$ dem Biegewinkel des Warmumformmaterials entspricht. $\alpha$ wird nach VDA 238-100 ermittelt.

Um das Leichtbaupotenzial höchstfester Warmumformmaterialien nutzen zu können, insbesondere ohne auf spätere Zusatzmaßnahmen, wie ein Strahlen zur Zunderentfernung, zurückgreifen zu müssen und eine gewisse Barriererewirkung bezüglich Korrosion anbieten zu können, ist das Warmumformmaterial gemäß einer weiteren Ausgestaltung ein- oder beidseitig mit einem Korrosionsschutzüberzug, insbesondere mit einem zinkbasierten oder aluminiumbasierten Überzug, vorzugsweise mit einem AlSi-Überzug versehen, so dass die aus dem Warmumformmaterial hergestellten Bauteile zum späteren Einbau ohne weiteren Aufwand in eine Fahrzeugstruktur beispielsweise widerstandspunktverschweißt werden können und eine ausreichende Lackhaftung besitzen.

Gemäß einem zweiten Aspekt betrifft die Erfindung ein Bauteil hergestellt aus einem erfindungsgemäßen Warmumformmaterials mittels Presshärten, insbesondere zur Herstellung einer Komponente für den Automobilbau. Das pressgehärtete Warmumformmaterial weist nur geringe Veränderungen in den Eigenschaften der einzelnen Lagen (Verbundpartner) im Vergleich zu den aus dem Stand der Technik bekannten Werkstoffverbunden bei gleichzeitig hoher Festigkeit und Duktilität im oberflächennahen Bereich auf.

Gemäß einem dritten Aspekt betrifft die Erfindung eine Verwendung eines Bauteils hergestellt aus dem erfindungsgemäßen Warmumformmaterial in einer Karosserie oder im Fahrwerk eines landgebundenen Fahrzeugs. Hierbei handelt es sich vorzugsweise um Personenkraftwagen, Nutzfahrzeuge oder Busse, sei es mit Verbrennungsmotor, rein elektrisch betriebene oder hybridbetriebene Fahrzeuge. Die Bauteile können als Längs- oder Querträger oder Säulen im landgebundenen Fahrzeug verwendet werden, beispielsweise sind sie als Profile ausgebildet, insbesondere als Crashprofil im Stoßfänger, Schweller, Seitenaufprallträger oder in Bereichen, in denen keine bis geringe Deformationen/Intrusionen im Crashfall gefordert werden.

Nachfolgend wird die vorliegende Erfindung anhand einer Figur und Beispielen näher erläutert:

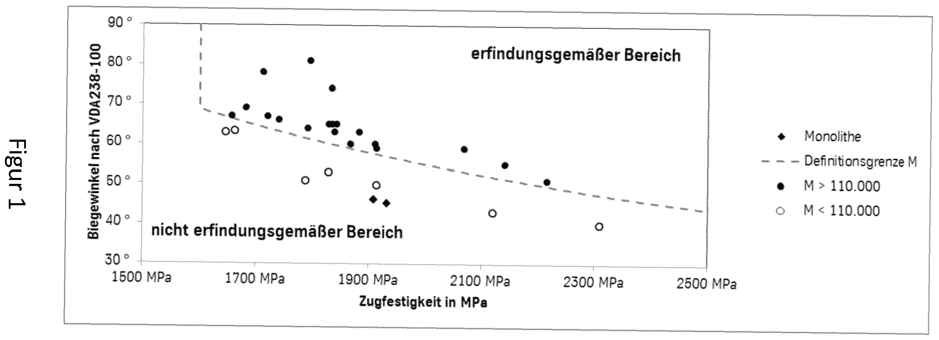

Fig. 1    zeigt Ergebnisse, die anhand eines Plättchenbiegetest gemäß VDA 238-100 an unterschiedlichen Proben ermittelt wurden.

Beschreibung der Ausführungsbeispiele

Aus handelsüblichen Stahlflachprodukten wurden mittels Warmwalzplattieren Warmumformmaterialien erzeugt, die einen dreilagigen Werkstoffverbund aufwiesen. Als Decklagen D1-D7 wurden die in Tabelle 1 und als Kernlagen K1-K6 wurden die in Tabelle 2 angegebenen Stähle verwendet. Die aufgeführten Zugfestigkeiten in den Tabellen 1 und 2 beziehen sich auf den pressgehärteten Zustand. Insgesamt wurden 26 unterschiedliche Warmumformmaterialien zusammengestellt, siehe Tabelle 3. Die Decklagen D4, D6 und D7 bzw. die mit den Decklagen D4, D6 und D7 erzeugten Warmumformmaterialien entsprachen nicht der erfindungsgemäßen Ausführung. Des Weiteren wurden zwei monolithische Mangan-Bor-Warmumformstähle R1 und R2 bereitgestellt.

Dabei wurden jeweils Blechzuschnitte mit zwei Decklagen und einer dazwischen angeordneten Kernlage aufeinander gestapelt, welche zumindest bereichsweise entlang ihrer Kanten stoffschlüssig, vorzugsweise mittels Schweißen zu einem Vorverbund miteinander verbunden wurden. Der Vorverbund wurde auf eine Temperatur > 1200°C gebracht und in mehreren Schritten zu einem Werkstoffverbund mit einer Gesamtdicke von 3 mm warmgewalzt und zu Kaltband mit 1,5 mm weiterverarbeitet. Der Werkstoffverbund respektive das Warmumformmaterial wurde beidseitig mit einem aluminiumbasierten Überzug, einem AlSi-Überzug mit jeweils einer Schichtdicke von 20 $\mu$m beschichtet. Die Schicht-

dicken können zwischen 5 und 30 $\mu$m betragen.

Aus den hergestellten Warmumformmaterialien und den zwei monolithischen Warmumformstählen wurden Platinen abgeteilt. Die Platinen wurden auf Austenitisierungstemperatur, insbesondere oberhalb von $A_{c3}$ (bezogen auf die Kernlage) in einem Ofen für jeweils ca. 6 min erwärmt und durchwärmt und wurden anschließend in einem gekühlten Werkzeug jeweils zu gleichen Bauteilen warm umgeformt und abgekühlt. Die Abkühlraten lagen bei > 30 K/s. Die Kernlagen waren über die Dicke im Wesentlichen vollständig aus Martensit, wobei in dem Übergangsbereich zur Decklage zusätzlich Anteile an Ferrit und/oder Bainit enthalten sein können. In den Decklagen hatte sich ein Gefüge/Mischgefüge aus mindestens einem der nachfolgenden Ausprägungen Ferrit, Bainit, Martensit eingestellt. In den Monolithen hatte sich ein im Wesentlichen vollständiges martensitisches Gefüge eingestellt.

Aus den pressgehärteten Bauteilen wurden Proben ausgeschnitten, welche einem Plättchenbiegetest nach VDA 238-100 unterzogen wurden. Die Ergebnisse sind in Fig. 1 zusammengestellt. Fig. 1 zeigt ein Diagramm, in dem auf der x-Achse die Gesamtzugfestigkeit in [MPa] und auf der y-Achse der Biegewinkel in [°] eingetragen sind. Der Zielbereich wird aufgespannt durch eine Gerade der minimalen Gesamtfestigkeit von 1600 MPa und die sich aus der Beziehung M mit M = $R_m$ (Verbund) * $\alpha$ (Verbund) ergebenden Abgrenzung für den Fall M = 110000 °MPa. Das heißt, der Zielbereich (erfindungsgemäßer Bereich, s. Fig. 1) enthält alle erfindungsgemäßen Ausführungen für die gleichermaßen gilt, dass sie eine Gesamtfestigkeit von > 1600 MPa und einen Wert M von >= 110000 °MPa aufweisen, und insbesondere die Bedingung S > 1.000.000 [MPa$^2$] erfüllen. Bei den nicht erfindungsgemäßen Ausführungen, in der Tabelle 3 mit einem o gekennzeichnet, ist deutlich zu erkennen, dass sie außerhalb des Zielbereichs liegen. Zwar erfüllt das Ausführungsbeispiel K5-D4 die Bedingung S > 1.000.000 [MPa$^2$] aufgrund einer hohen Festigkeit im oberflächennahen Bereich, jedoch liegt die Performance dieses Ausführungsbeispiels weit unterhalb dem Wert M > 110.000 °MPa, so dass durch die Eigenschaften dieses Warmumformmaterials kein wirtschaftlicher Leichtbau möglich ist.

Die Erfindung ist nicht auf die dargestellten Ausführungsbeispiele sowie auf die Ausführungen in der allgemeinen Beschreibung beschränkt. Vielmehr kann das erfindungsgemäße Warmumformmaterial auch Teil eines Tailored Product sein, beispielsweise als Teil eines Tailored Welded Blank und/oder Tailored Rolled Blank.

Tabelle 1

|    | C     | Si     | Mn   | P       | S       | Al     | Cr    | Nb      | Ti      | B       | Rm [MPa] |
|----|-------|--------|------|---------|---------|--------|-------|---------|---------|---------|----------|
| D1 | 0,155 | 0,4    | 2,3  | <=0,02  | <=0,003 | 0,7    | 0,7   | 0,025   | 0,025   | 0,0015  | 1152     |
| D2 | 0,14  | 0,23   | 1,15 | <=0,015 | <=0,005 | 0,09   | 0,25  | 0,025   | <=0,008 | 0,0025  | 1216     |
| D3 | 0,23  | 0,25   | 1,3  | 0,01    | 0,0015  | 0,035  | 0,15  | 0,0015  | 0,003   | 0,0028  | 1531     |
| D4 | 0,07  | 0,205  | 0,8  | 0,02    | 0,006   | 0,04   | 0,075 | 0,02    | 0,004   | <=0,001 | 458      |
| D5 | 0,16  | <=0,1  | 1,1  | <=0,015 | <=0,006 | <=0,01 | 0,9   | <=0,003 | <=0,008 | <=0,001 | 917      |
| D6 | 0,09  | 0,25   | 0,8  | <=0,025 | <=0,015 | 0,04   | 0,4   | <=0,01  | 0,03    | 0,0025  | 823      |
| D7 | 0,04  | <=0,03 | 0,24 | <=0,015 | <=0,012 | 0,04   | <=0,05| <=0,004 | <=0,004 | <=0,001 | 387      |

Tabelle 2

| | C | Si | Mn | P | S | Al | Cr | Ni | Nb | Ti | V | B | Ca | Rm [MPa] |
|---|---|---|---|---|---|---|---|---|---|---|---|---|---|---|
| K1 | 0,35 | 0,25 | 1,3 | 0,01 | 0,0015 | 0,035 | 0,14 | <=0,06 | 0,0015 | 0,0325 | <=0,01 | 0,0028 | 0,0018 | 1911 |
| K2 | 0,37 | 0,095 | 0,85 | <=0,025 | <=0,005 | 0,043 | 0,2 | <=0,15 | <=0,01 | 0,043 | <=0,05 | 0,002 | | 1997 |
| K3 | 0,42 | 0,225 | 1,3 | 0,02 | 0,003 | 0,035 | 0,35 | <=0,06 | 0,003 | 0,0275 | <=0,01 | 0,003 | 0,0013 | 2093 |
| K4 | 0,45 | 0,07 | 0,62 | 0,01 | 0,004 | 0,04 | 0,22 | <=0,1 | 0,002 | 0,026 | <=0,01 | 0,003 | <=0,005 | 2304 |
| K5 | 0,48 | 0,22 | 1,2 | 0,01 | 0,002 | 0,035 | 0,24 | <=0,1 | 0,002 | 0,03 | <=0,01 | 0,0032 | 0,002 | 2400 |
| K6 | 0,53 | 0,23 | 1,19 | 0,01 | 0,003 | 0,03 | 0,58 | 0,2 | 0,002 | 0,025 | 0,02 | 0,003 | | 2518 |

Tabelle 3

| Kernlage | Anteil | Decklage | Anteil | Zugfestigkeit [MPa] | Biegewinkel [°] | Faktor M [°MPa] | Faktor S [MPa$^2$] | |
|---|---|---|---|---|---|---|---|---|
| K1 | 80% | D5 | 10% | 1836 MPa | 65° | 119.340 | 1.620.000 | X |
| K1 | 70% | D5 | 15% | 1792 MPa | 64° | 114.688 | 1.480.000 | X |
| K1 | 60% | D5 | 20% | 1722 MPa | 67° | 115.347 | 1.340.000 | X |
| K1 | 70% | D6 | 15% | 1658 MPa | 67° | 111.086 | 1.318.500 | X |
| K1 | 90% | D7 | 5% | 1788 MPa | 51° | 90.652 | 657.020 | O |
| K1 | 80% | D7 | 10% | 1663 MPa | 63° | 105.102 | 592.040 | O |
| K3 | 90% | D7 | 5% | 1914 MPa | 50° | 95.126 | 725.420 | O |
| K3 | 80% | D7 | 10% | 1829 MPa | 53° | 96.754 | 652.840 | O |
| K3 | 70% | D7 | 15% | 1646 MPa | 63° | 103.533 | 580.260 | O |
| K2 | 80% | D1 | 10% | 1883 MPa | 63° | 118.629 | 2.064.000 | X |
| K2 | 70% | D1 | 15% | 1834 MPa | 74° | 135.716 | 1.896.000 | X |
| K2 | 60% | D1 | 20% | 1795 MPa | 81° | 145.411 | 1.728.000 | X |
| K1 | 80% | D1 | 10% | 1868 MPa | 60° | 112.080 | 1.968.000 | X |
| K1 | 70% | D1 | 15% | 1829 MPa | 65° | 118.885 | 1.812.000 | X |
| K1 | 60% | D1 | 20% | 1683 MPa | 69° | 116.127 | 1.656.000 | X |
| K1 | 80% | D2 | 10% | 1839 MPa | 63° | 115.857 | 1.968.000 | X |
| K1 | 70% | D2 | 15% | 1740 MPa | 66° | 114.866 | 1.812.000 | X |
| K1 | 60% | D2 | 20% | 1712 MPa | 78° | 133.536 | 1.656.000 | X |
| K1 | 80% | D3 | 10% | 1914 MPa | 59° | 112.926 | 2.505.000 | X |
| K1 | 70% | D3 | 15% | 1911 MPa | 60° | 114.660 | 2.332.500 | X |
| K1 | 60% | D3 | 20% | 1843 MPa | 65° | 119.821 | 2.160.000 | X |
| K4 | 70% | D1 | 15% | 2069 MPa | 59° | 122.071 | 2.148.000 | X |
| K5 | 70% | D1 | 15% | 2142 MPa | 55° | 117.810 | 2.232.000 | X |
| K6 | 70% | D1 | 15% | 2216 MPa | 51° | 113.016 | 2.316.000 | X |
| K5 | 76% | D4 | 12% | 2121 MPa | 43° | 91.203 | 980.000 | O |
| K5 | 90% | D4 | 5% | 2309 MPa | 40° | 92.360 | 1.137.500 | O |
| R1 | 100% | -- | | 1933 MPa | 45° | 86.985 | | O |
| R2 | 100% | -- | | 1909 MPa | 46° | 87.814 | | O |
| X erfindungsgemäß | | | | | | | | |
| O nicht erfindungsgemäß | | | | | | | | |

**Patentansprüche**

1. Warmumformmaterial aus einem dreilagigen Werkstoffverbund, umfassend eine Kernlage aus einem härtbaren Stahl, welcher im pressgehärteten Zustand des Warmumformmaterials eine Zugfestigkeit > 1900 MPa und/oder eine Härte > 575 HV10 aufweist, und zwei stoffschlüssig mit der Kernlage verbundene Decklagen aus einem im Vergleich zur Kernlage weicheren Stahl, welcher im pressgehärteten Zustand des Warmumformmaterials eine Zugfestigkeit > 750 MPa und/oder eine Härte > 235 HV10 aufweisen, wobei die Kernlage neben Fe und herstellungsbedingt unvermeidbaren Verunreinigungen in Gew.-% aus

C: 0,31 - 0,6 %,
Si: bis 0,5 %,
Mn: 0,5 - 2,0%,
P: bis 0,06 %,
S: bis 0,03 %,
Al: bis 0,2 %,
Cr+Mo: bis 1,2 %,
Cu: bis 0,2%,
N: bis 0,01 %,
Nb+Ti: bis 0,2 %,
Ni: bis 0,4 %,
V: bis 0,2 %,
B: bis 0,01 %,
As: bis 0,02 %,
Ca: bis 0,01 %,
Co: bis 0,02 %,
Sn: bis 0,05 %
besteht und wobei die Decklagen neben Fe und herstellungsbedingt unvermeidbaren Verunreinigungen in Gew.-% aus

C: 0,13 - 0,3 %,
Si: bis 1,0 %,
Mn: 0,3 - 3,0 %,
P: bis 0,1 %,
S: bis 0,06 %,
Al: bis 1,0 %,
Cr+Mo: bis 1,5 %,
Cu: bis 0,3%,
N: bis 0,01 %,
Ni: bis 0,3 %,
Nb+Ti: bis 0,25 %,
V: bis 0,05 %,
B: bis 0,01 %,
Sn: bis 0,05 %,
Ca: bis 0,01 %,
Co: bis 0,02 %
bestehen.

2. Warmumformmaterial nach einem der vorgenannten Ansprüche, wobei die Kernlage einen C-Gehalt zwischen 0,33 - 0,55 Gew.-%, insbesondere zwischen 0,37 - 0,53 Gew.-% aufweist.

3. Warmumformmaterial nach einem der vorgenannten Ansprüche, wobei die Decklagen einen C-Gehalt zwischen 0,13 - 0,28 Gew.-%, insbesondere zwischen 0,17 - 0,25 Gew.-% aufweist.

4. Warmumformmaterial nach einem der vorgenannten Ansprüche, wobei die Decklagen jeweils eine Materialdicke zwischen 5 % und 30 %, insbesondere zwischen 10 % und 20 % bezogen auf die Gesamtmaterialdicke des Warmumformmaterials aufweisen.

5. Warmumformmaterial nach einem der vorgenannten Ansprüche, wobei der Werkstoffverbund mittels Plattieren oder mittels Gießen hergestellt ist.

6. Warmumformmaterial nach einem der vorgenannten Ansprüche, wobei das Verhältnis vom C-Gehalt der Kernlage zum C-Gehalt der Decklage < 6, insbesondere < 5, vorzugsweise < 4, besonders bevorzugt < 3 ist.

7. Warmumformmaterial nach einem der vorgenannten Ansprüche, wobei das Warmumformmaterial im pressgehärteten Zustand einen Faktor S > 1.000.000 [MPa$^2$] besitzt, wobei S ermittelt wird durch S = (% Rm (Kernlage) + % Rm (Decklagen)) * Rm (Decklage), wobei Rm den Zugfestigkeiten und % den prozentualen Materialdicken der jeweiligen Lagen entsprechen.

8. Warmumformmaterial nach einem der vorgenannten Ansprüche, wobei das Warmumformmaterial im pressgehärteten Zustand einen Faktor M > 110.000 [°MPa] besitzt, wobei M ermittelt wird durch M = Rm (Verbund) * α (Verbund), wobei Rm der Zugfestigkeit und α dem Biegewinkel des Warmumformmaterials entspricht, wobei α nach VDA 238-100 ermittelt wird.

9. Warmumformmaterial nach einem der vorgenannten Ansprüchen, wobei das Warmumformmaterial ein- oder beidseitig mit einem Korrosionsschutzüberzug, insbesondere mit einem zinkbasierten oder aluminiumbasierten Überzug versehen ist.

10. Bauteil, hergestellt aus einem Warmumformmaterial nach einem der vorgenannten Ansprüche mittels Presshärten, wobei die Kernlage über die Dicke im Wesentlichen vollständig aus Martensit ist und wobei im Jbergangsbereich zur Decklage zusätzlich Ferrit und/oder Bainit enthalten sein können.

11. Verwendung des Bauteils nach Anspruch 10 in einer Karosserie oder im Fahrwerk eines landgebundenen Fahrzeugs.

**Claims**

1. Hot-working material composed of a three-layer composite material, comprising a core layer of a hardenable steel which in the press-hardened state of the hot-working material has a tensile strength > 1900 MPa and/or a hardness > 575 HV10 and two outer layers bonded substance-to-substance to the core layer and composed of a steel which is softer than the core layer and in the press-hardened state of the hot-working material has a tensile strength > 750 MPa and/or a hardness > 235 HV10, wherein the core layer, besides Fe and unavoidable production-related impurities, in wt%, consists of

C: 0.31-0.6%,
Si: up to 0.5%,
Mn: 0.5-2.0%,
P: up to 0.06%,
S: up to 0.03%,
Al: up to 0.2%,
Cr+Mo: up to 1.2%,
Cu: up to 0.2%,
N: up to 0.01%,
Nb+Ti: up to 0.2%,
Ni: up to 0.4%,
V: up to 0.2%,
B: up to 0.01%,
As: up to 0.02%,
Ca: up to 0.01%,
Co: up to 0.02%,
Sn: up to 0.05%,
and the outer layers, besides Fe and unavoidable production-related impurities, in wt%, consist of
C: 0.13-0.3%,
Si: up to 1.0%,
Mn: 0.3-3.0%,
P: up to 0.1%,
S: up to 0.06%,
Al: up to 1.0%,
Cr+Mo: up to 1.5%,
Cu: up to 0.3%,
N: up to 0.01%,
Ni: up to 0.3%,
Nb+Ti: up to 0.25%,
V: up to 0.05%,
B: up to 0.01%,
Sn: up to 0.05%,
Ca: up to 0.01%,
Co: up to 0.02%.

**2.** Hot-working material according to the preceding claim, wherein the core layer has a C content between 0.33-0.55 wt%, more particularly between 0.37-0.53 wt%.

**3.** Hot-working material according to either of the preceding claims, wherein the outer layers have a C content between 0.13-0.28 wt%, more particularly between 0.17-0.25 wt%.

**4.** Hot-working material according to any of the preceding claims, wherein the outer layers each have a thickness of material of between 5% and 30%, more particularly between 10% and 20%, based on the total thickness of the hot-working material.

**5.** Hot-working material according to any of the preceding claims, wherein the composite material has been produced by means of cladding or by means of casting.

**6.** Hot-working material according to any of the preceding claims, wherein the ratio of the C content of the core layer to the C content of the outer layer is < 6, more particularly < 5, preferably < 4, particularly preferably < 3.

**7.** Hot-working material according to any of the preceding claims, wherein the hot-working material in the press-hardened state has a factor S > 1,000,000 [MPa$^2$], where S is determined by S = (% Rm (core layer) + % Rm (outer layers)) * Rm (outer layer), where Rm corresponds to the tensile strengths and % corresponds to the percentage thicknesses of material of the respective layers.

**8.** Hot-working material according to any of the preceding claims, wherein the hot-working material in the press-hardened state has a factor M > 110,000 [°MPa], where M is determined by M = Rm (composite) * $\alpha$ (composite), where Rm corresponds to the tensile strengths and $\alpha$ corresponds to the bending angle of the hot-working material, where $\alpha$ is determined in accordance with VDA 238-100.

**9.** Hot-working material according to any of the preceding claims, wherein the hot-working material has been provided on one or both sides with an anticorrosion coating, in particular with a zinc-based or aluminium-based coating.

**10.** Component produced from a hot-working material according to any of the preceding claims by means of press hardening, wherein the core layer is composed substantially completely of martensite over the thickness and ferrite and/or bainite can additionally be present in the transition region to the outer layer.

**11.** Use of the component according to Claim 10 in bodywork or in the chassis of a land vehicle.

**Revendications**

**1.** Matériau de formage à chaud en un composite de matériau tricouche, comprenant une couche de noyau en un acier durcissable, qui présente à l'état durci à la presse du matériau de formage à chaud une résistance à la traction > 1 900 MPa et/ou une dureté > 575 HV10, et deux couches de recouvrement, reliées par accouplement de matière avec la couche de noyau, en un acier plus mou en comparaison de la couche de noyau, qui présente à l'état durci à la presse du matériau de formage à chaud une résistance à la traction > 750 MPa et/ou une dureté > 235 HV10, la couche de noyau étant constituée, outre du Fe et des impuretés inévitables liées à la fabrication, en % en poids par :

C : 0,31 à 0,6%,
Si : jusqu'à 0,5 %,
Mn : 0,5 à 2,0%,
P : jusqu'à 0,06 %,
S : jusqu'à 0,03 %,
Al : jusqu'à 0,2 %,
Cr+Mo : jusqu'à 1,2 %,
Cu : jusqu'à 0,2 %,
N : jusqu'à 0,01 %,
Nb+Ti : jusqu'à 0,2 %,
Ni : jusqu'à 0,4 %,
V : jusqu'à 0,2 %,
B : jusqu'à 0,01 %,

As : jusqu'à 0,02 %,
Ca : jusqu'à 0,01 %,
Co : jusqu'à 0,02 %,
Sn : jusqu'à 0,05 %,

et les couches de recouvrement étant constituées, outre du Fe et des impuretés inévitables liées à la fabrication, en % en poids par :

C : 0,13 à 0,3%,
Si : jusqu'à 1,0%,
Mn : 0,3 à 3,0 %,
P : jusqu'à 0,1 %,
S : jusqu'à 0,06 %,
Al : jusqu'à 1,0 %,
Cr+Mo : jusqu'à 1,5 %,
Cu : jusqu'à 0,3 %,
N : jusqu'à 0,01 %,
Ni : jusqu'à 0,3 %,
Nb+Ti : jusqu'à 0,25 %,
V : jusqu'à 0,05 %,
B : jusqu'à 0,01 %,
Sn : jusqu'à 0,05 %,
Ca : jusqu'à 0,01 %,
Co : jusqu'à 0,02 %.

**2.** Matériau de formage à chaud selon l'une quelconque des revendications précédentes, dans lequel la couche de noyau présente une teneur en C comprise entre 0,33 et 0,55 % en poids, notamment entre 0,37 et 0,53 % en poids.

**3.** Matériau de formage à chaud selon l'une quelconque des revendications précédentes, dans lequel les couches de recouvrement présentent une teneur en C comprise entre 0,13 et 0,28 % en poids, notamment entre 0,17 et 0,25 % en poids.

**4.** Matériau de formage à chaud selon l'une quelconque des revendications précédentes, dans lequel les couches de recouvrement présentent chacune une épaisseur de matériau comprise entre 5 % et 30 %, notamment entre 10 % et 20 %, par rapport à l'épaisseur de matériau totale du matériau de formage à chaud.

**5.** Matériau de formage à chaud selon l'une quelconque des revendications précédentes, dans lequel le composite de matériau est fabriqué par placage ou par coulage.

**6.** Matériau de formage à chaud selon l'une quelconque des revendications précédentes, dans lequel le rapport entre la teneur en C de la couche de noyau et la teneur en C de la couche de recouvrement est < 6, notamment < 5, de préférence < 4, de manière particulièrement préférée < 3.

**7.** Matériau de formage à chaud selon l'une quelconque des revendications précédentes, dans lequel le matériau de formage à chaud présente à l'état durci à la presse un facteur S > 1 000 000 [MPa$^2$], S étant déterminé par S = (% Rm (couche de noyau) + % Rm (couches de recouvrement)) * Rm (couche de recouvrement), Rm correspondant aux résistances à la traction et % aux épaisseurs de matériau en pourcentage des couches respectives.

**8.** Matériau de formage à chaud selon l'une quelconque des revendications précédentes, dans lequel le matériau de formage à chaud présente à l'état durci à la presse un facteur M > 110 000 [°MPa], M étant déterminé par M = Rm (composite) * α (composite), Rm correspondant à la résistance à la traction et α à l'angle de flexion du matériau de formage à chaud, α étant déterminé selon VDA 238-100.

**9.** Matériau de formage à chaud selon l'une quelconque des revendications précédentes, dans lequel le matériau de formage à chaud est muni d'un ou des deux côtés d'un revêtement de protection contre la corrosion, notamment d'un revêtement à base de zinc ou à base d'aluminium.

**10.** Composant, fabriqué à partir d'un matériau de formage à chaud selon l'une quelconque des revendications précédentes par durcissement à la presse, dans lequel la couche de noyau est essentiellement entièrement constituée par de la martensite sur l'épaisseur et dans lequel de la ferrite et/ou de la bainite peuvent en outre être contenues dans la zone de transition vers la couche de recouvrement.

11. Utilisation du composant selon la revendication 10 dans une carrosserie ou dans le châssis d'un véhicule terrestre.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008022709 A1
- EP 2886332 A1
- DE 102005006606 B3
- JP 03133630 A